# EUROPEAN PATENT APPLICATION

(11) **EP 1 825 909 A1**
(43) Date of publication of application: **29.08.2007**
(21) Application number: 06110347.9
(22) Date of filing: 23.02.2006
(51) Int. Cl.: B01J 19/18, C08F 10/00, B01J 8/00, B01J 4/00

(54) **Transfer pipe between loop reactors**

(71) Applicant: TOTAL PETROCHEMICALS RESEARCH FELUY, 7181 Seneffe (Feluy) (BE)
(72) Inventor: Lewalle, André, B-1050, Bruxelles (BE); Mignon, Denis, B-1420, Braine-l'Alleud (BE); Davidts, Sandra, B-1400, Nivelles (BE)
(74) Representative: Detrait, Jean-Claude

(57) **Abstract**

The present system discloses a transfer system devised in order to produce optimal flow from the first to the second loop reactor, by connecting the transfer lines to a by-pass line and by separating the connecting points of the transfer lines into the by-pass line by at least 70 cm.

## Description

The present invention discloses a geometrical configuration of the transfer system that allows optimal flow in the transfer line and reduces clogging.

High density polyethylene (HDPE) was first produced by addition polymerisation carried out in a liquid that was a solvent for the resulting polymer. That method was rapidly replaced by polymerisation under slurry conditions according to Ziegler or Phillips. More specifically slurry polymerisation was carried out continuously in a pipe loop reactor. A polymerisation effluent is formed which is a slurry of particulate polymer solids suspended in a liquid medium, ordinarily the reaction diluent and unreacted monomer (see for Example US-A-2,285,721). It is desirable to separate the polymer and the liquid medium comprising an inert diluent and unreacted monomers without exposing the liquid medium to contamination so that said liquid medium can be recycled to the polymerisation zone with minimal or no purification. As described in US-A-3,152,872, a slurry of polymer and the liquid medium is collected in one or more settling legs of the slurry loop reactor from which the slurry is periodically discharged to a flash chamber thus operating in a batch-wise manner. The mixture is flashed in order to remove the liquid medium from the polymer. It is afterwards necessary to recompress the vaporised polymerisation diluent to condense it to a liquid form prior to recycling it as liquid diluent to the polymerisation zone after purification if necessary.

Settling legs are typically required to increase the polymer concentration in the slurry extracted from the reactor; they present however several problems as they impose a batch technique onto a continuous process.

EP-A-0,891,990 and US-A-6,204,344 disclose two methods for decreasing the discontinuous behaviour of the reactor and by the same occasion for increasing the solids concentration. One method consists in replacing the discontinuous operation of the settling legs by a continuous retrieval of enriched slurry. Another method consists in using a more aggressive circulation pump.

More recently, EP-A-1410843 has disclosed a slurry loop reactor comprising on one of the loops a by-pass line connecting two points of the same loop by an alternate route having a different transit time than that of the main route for improving the homogeneity of the circulating slurry.

The double loop systems are quite desirable as they offer the possibility to prepare highly tailored polyolefins by providing different polymerising conditions in each reactor. Polymer product is transferred from the first to the second loop through one or several transfer line(s). It is however often difficult to find suitable space to build these double loop reactors as in the current configuration they need to be close to one another in order to insure adequate transfer of growing polymer from one loop to the other. In practical situation, the transfer lines are on the contrary generally quite long and the average velocity of the material circulating in those lines is of less than 1 m/s. When a very active catalyst system, such as a metallocene catalyst system, is used in the double loop reactor, the length of the transfer line becomes an issue. Because of the high reactivity of very active catalyst systems, there is a risk of polymerisation in the transfer line and thus of clogging. These lines must therefore be very short in order to avoid clogging due to the on-going polymerisation of residual monomers.

When clogging occurs in one of the many transfer lines, the temperature in said line drops resulting in shrinking of the line. The whole transfer system is thus deformed and subject to stress and ultimately to weakening and/or breakage.

There is thus a need to provide means to connect two existing reactors that may be distant from one another and to insure a smooth operation of polymer product transfer from the first to the second reactor.

It is an aim of the present invention to optimise flow in the transfer system.

It is also an aim of the present invention to reduce clogging in the transfer lines.

At least one of these aims is achieved, at least partly, with the present invention.

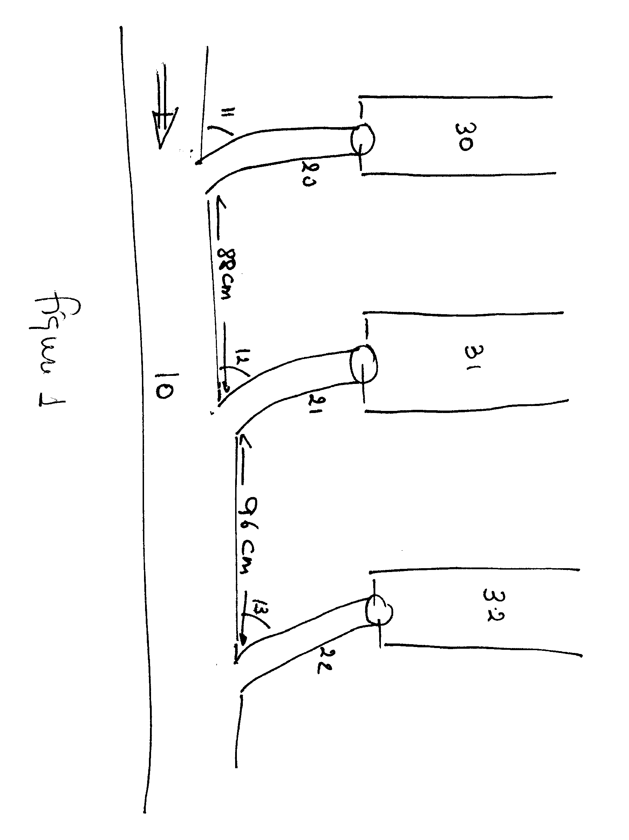

Figure 1 represents a schematic diagram of the transfer system.

Accordingly, the present invention discloses a transfer system comprising:
- at least two transfer lines (20, 21);
- at least two settling legs (30, 31) each connected via a product take off (PTO) valve to one transfer line;
- a by-pass line (10) to which all the transfer lines are connected
wherein the distance between the connecting points of the transfer lines to the by-pass line is of at least 70 cm.

Preferably the distance between connecting points is of at least 80 cm.

In a preferred embodiment according to the present invention, the transfer lines are connected to the by-pass line at an angle (11, 12) such that the velocity of the incoming material has a component parallel to the axis of the by-pass line in the same direction than that the flow within the by-pass line. The angle is of from 30 to 75 degrees with respect to the by-pass line, preferably of about 45 degrees.

The pressure difference between the entry point and exit point in the by-pass line is typically of about 0.35 bars thereby producing a velocity of slurry circulating in the by-pass line of about 10 m/s. Each time material is dumped through one of the transfer lines, the pressure increase within the transfer line is of from 1 to 2 bars, thus larger than the differential pressure across the by-pass line. The velocity in the by-pass line, upstream of the injection point, is consequently reduced to 3 to 4 m/s caused by the massive arrival of material, thus well below a velocity of about 7 m/s recommended to avoid sedimentation in the by-pass line.

Each time material is dumped, there is thus slowing down of the circulation in the by-pass line and increase in powder concentration that can result in wave-like spreading and re-deposition. In addition, material accumulates below each transfer line. Typically, in the transfer line there is 50 to 60 wt% of solids, based on the weight of the slurry, whereas, the solids content in the by-pass line is of about 40 wt%.

In order to reduce the perturbation caused in the by-pass line by consecutive dumps of the two or more transfer lines, the applicant has devised a geometrical configuration wherein the spacing between the connecting points of the transfer lines into the by-pass line is sufficient to allow the perturbation of any one dump to subside before the next dump brings a new perturbation. That spacing must exceed 70 cm, preferably 80 cm. Said spacing should be as large as possible but within the constraints of available space. A spacing larger than 2 m is thus unpractical.

The dumps may occur in any order but, when there are three or more transfer lines, it is preferred that the order be selected so that the transfer line connected most downstream in the by-pass line be dumped first and the transfer line connected most upstream be dumped last.

In another embodiment according to the present invention, several transfer lines can be joined together into a single transfer line before being connected to the by-pass line.

Dumps in the present system are regulated by pressure. When the pressure reaches a set point typically of from 35 to 45 barg, the PTO valve releasing slurry from a settling leg is operated and material is discharged.

The reactor can be operated with any catalyst system known in the art but it is most useful for very active catalyst systems such as metallocene catalyst systems. It can be used for the homo- or co-polymerisation of olefins.

Preferably, the olefin is ethylene or alpha-olefin, more preferably ethylene or propylene, and most preferably ethylene. In copolymerisation, the comonomer is preferably selected from C3 to C8 alpha-olefins, more preferably it is hexene.

The present invention produces the same advantages as those obtained with the by-pass line disclosed in EP-A-1410843.

In addition to these advantages procured by the by-pass in a single reactor the transfer lines connecting the first reactor exit point to the by-pass line can be shortened reducing the risk of polymerising unreacted olefins emerging from the first reactor in these transfer lines. The concentration of olefin in the first reactor can be increased to a concentration of at least 6 %, preferably of about 8 %. The risk of blockage in the by-pass line is further reduced by insuring adequate spacing between the connecting points of the transfer lines into the by-pass line and by input of material at an appropriate angle.

### Examples.

Several transfer designs were evaluated. A schematic design of the transfer system is represented in Figure 1. For all designs, the pressure drop between the entry point and the exit point of the by-pass line completely controlled the flow in the line.

The reactor parameters were as follows.

### First reactor

volume : 19 m³
number of settling leg : 3
internal diameter of settling legs: 19.37 cm (standard 8" pipe))
volume of settling legs: 30 litres each
reactor internal diameter: 45.56 cm (standard 20" pipe)
polyethylene production: 6.5 tons/hr
ethylene concentration: 6 wt %
solids concentration: 42 %

### Second reactor

Volume: 19 m³
number of settling legs: 4
internal diameter of settling legs: 19.37 cm (standard 8" pipe)
volume of settling legs: 30 litres each
reactor internal diameter: 45.56 cm (standard 20" pipe)
polyethylene production: 4.5 tons/hr
ethylene concentration: 7 wt %
solids concentration: 42 %.

The parameters of the transfer system were selected as follows.

By-pass line.
- angle at flow separation = 33°
- angle at flow reunion = 45°
- length of by-pass line = 18 m
- internal diameter of by-pass line = 14.64 cm (standard 6" pipe)
- the by-pass line had 5 bends: 3 bends had an angle of 90° degrees, 1 bend had a deflection angle of 33 degrees and 1 bend had a deflection angle of 23 degrees.

At the exit of the first reactor, the polymer product was collected in three settling legs, each having a diameter of 19.37 cm (standard 8" pipe) and a volume of 30 L. Each settling leg was equipped with a PTO valve opening cyclically into a transfer line. The transfer lines had a diameter of 7.37 cm (standard 3" pipe) and a length of from 2 to 3 metres. A flushing of the transfer lines with isobutane was set to maintain a countinous minimum flow in the transfer lines.

The three transfer lines (20, 21, 22) were connected into the by-pass lines (11) at an angle (11, 12, 13) of 45 degrees with respect to the by-pass line and at distances respectively of 88 cm between transfer lines 20 and 21 and of 96 cm between transfer lines 21 and 22.

The cycle time of the PTO valve on each settling leg was typically of about 20 sec, resulting of two dumps per leg every 20 seconds with amount of material of about 10 kg of slurry per dump.

## Claims

1. A transfer system comprising:
- at least two transfer lines (20, 21);
- at least two settling legs (30, 31) each connected via a product take off valve to one transfer line;
- a by-pass line (10) to which all the transfer lines are connected
wherein the spacing between the connecting points of the transfer lines to the by-pass line is of at least 70 cm.

2. The transfer system of claim 1 wherein the spacing between the connecting points of the transfer lines to the by-pass line is of at least 80 cm.

3. The transfer system of claim 1 or claim 2 wherein the transfer lines are connected to the by-pass line at an angle (11, 12) such that the velocity of the incoming material has a component parallel to the axis of the by-pass line in the same direction than that of the flow within the by-pass line.

4. The transfer system of claim 3 wherein the transfer lines are connected to the by-pass line at an angle of from 30 to 75 degrees with respect to the by-pass line.

5. The transfer system of any one of the preceding claims wherein several separate transfer lines are joined together into a single transfer line before being connected to the by-pass line.

6. The transfer system of any one of the preceding claims wherein the product take off valve commanding a dump of a settling leg is operated by pressure.

7. The transfer system of claim 6 wherein the pressure has a set point of from 35 to 45 barg.

8. Use of the transfer system of any one of claims 1 to 7 in a double loop reactor system that homo- or co-polymerises olefins.

9. Use of claim 8 wherein the olefin is ethylene.

10. Use of the transfer system of any one of claims 1 to 7 to operate in series two distant single loop reactors.
